# EUROPÄISCHE PATENTANMELDUNG

(11) **EP 1 506 891 A2**
(43) Veröffentlichungstag der Anmeldung: **16.02.2005**
(21) Anmeldenummer: 04013823.2
(22) Anmeldetag: 11.06.2004
(51) Int. Cl.: B60N 2/24, B60N 2/68

(54) **Fahrgastsitz für Personenbeförderungsfahrzeuge**

(30) Priorität: 09.08.2003 DE 10336662
(71) Anmelder: Vogelsitze GmbH, 76228 Karlsruhe (DE)
(72) Erfinder: Bilfinger, Jan, 76228 Karlsruhe (DE)
(74) Vertreter: Dimmerling, Heinz, Dipl.-Ing.

(57) **Zusammenfassung**

Ein Fahrgastsitz für Personenbeförderungsfahrzeuge, insbesondere für Busse und Bahnen, mit einem Sitzelement 11 und einer Rückenlehne 12, welche an beidseits des Sitzelements 11 angeordneten Sitzwinkeln 1, 2 befestigt ist, ist dadurch gekennzeichnet, daß die Sitzwinkel 1, 2 aus einem Grundelement 1, mittels welchem die Rückenlehne bereits vollständig befestigbar ist, und einem lösbar mit ihm verbundenen Verstärkungselement 2 bestehen.

## Beschreibung

Die Erfindung betrifft einen Fahrgastsitz für Personenbeförderungsfahrzeuge, insbesondere für Busse und Bahnen, nach dem Oberbegriff des Anspruchs 1, mit einem Sitzelement und einer Rückenlehne, welche an beidseits des Sitzelements angeordneten Sitzwinkeln befestigt ist.

Ein derartiger Fahrgastsitz ist im Stand der Technik hinlänglich bekannt, da er regelmäßig in Fahrzeugen des öffentlichen Personennahverkehrs Verwendung findet. Darüber hinaus ist ein derartiger Fahrgastsitz aus der EP 0 544 938 A1 bekannt.

Bei dem bekannten Fahrgastsitz sind zwei Sitzwinkel auf einer Quertraverse angeordnet, welche ihrerseits auf zwei Füßen angeordnet ist. Zwischen den Sitzwinkeln befindet sich das Sitzelement. Die Sitzwinkel weisen jeweils an ihrem sich nach oben erstreckenden Schenkel eine Öffnung auf, mittels der die Rückenlehne mit dem Sitzwinkel verbunden ist. Bei einer schwenkbaren Rückenlehne erstreckt sich eine Schwenkachse, um die die Rückenlehne schwenkbar ist, durch die Öffnungen. Die Öffnungen befinden sich im oberen Bereich des Sitzelements.

Die auf die Rückenlehne wirkenden Kräfte, welche insbesondere bei einer Vollbremsung oder einem Auffahrunfall sehr groß sein können, werden somit in den Sitzwinkel eingeleitet. Die Sitzwinkel müssen daher entsprechend stabil ausgebildet sein.

Aus Kostengründen und aus Gründen der Gewichtserspamis ist man jedoch bestrebt, die Sitzwinkel nur so stabil auszubilden, wie es zur Erfüllung von Sicherheitsvorschriften erforderlich ist.

Da bei der Verwendung von 3-Punkt-Sicherheitsgurten auf die Rückenlehne erheblich größere Kräfte einwirken als bei Sitzen mit 2-Punkt-Sicherheitsgurten oder Sitzen ohne Sicherheitsgurte, müssen insbesondere Sitzwinkel für Fahrgastsitze mit 3-Punkt-Sicherheitsgurten entsprechend stabiler ausgebildet sein als Sitzwinkel für Fahrgastsitze ohne Sicherheitsgurte.

Bei Sitzwinkeln für Fahrgastsitze mit 3-Punkt-Sicherheitsgurten wird die Stabilität regelmäßig dadurch erhöht, daß Zusatzelemente, mittels welcher dem Sitzwinkel teilweise ein Kastenprofil gegeben wird, auf den Sitzwinkel aufgeschweißt werden. Zwar wird hierdurch die Stabilität in genügender Weise erhöht, jedoch bringt diese Vorgehensweise Nachteile in der Logistik mit sich. Denn es müssen unterschiedliche Sitzwinkel hergestellt und am Lager gehalten werden. Des weiteren ist das Herstellen der stabileren Sitzwinkel recht aufwendig.

Es ist Aufgabe der Erfindung, den Sitzwinkel für einen eingangs genannten Fahrgastsitz derart auszubilden, daß sich seine Herstellung sowie Lagerhaltung erheblich vereinfacht.

Die Lösung dieser Aufgabe ergibt sich aus den Merkmalen des kennzeichnenden Teils des Anspruchs 1. Vorteilhafte Weiterbildungen der Erfindung ergeben sich aus den Unteransprüchen.

Gemäß der Erfindung ist ein Fahrgastsitz für Personenbeförderungsfahrzeuge, insbesondere für Busse und Bahnen, mit einem Sitzelement und einer Rückenlehne, welche an beidseits des Sitzelements angeordneten Sitzwinkeln befestigt ist, dadurch gekennzeichnet, daß die Sitzwinkel aus einem Grundelement, mittels dem die Rückenlehne bereits vollständig befestigbar ist, und einem lösbar mit ihm verbundenen Verstärkungselement bestehen.

Dadurch, daß die Sitzwinkel aus einem Grundelement, welches die Funktion eines Sitzwinkels vollständig erfüllt, und einem lösbar mit ihm verbundenen Verstärkungselement bestehen, vereinfacht sich die Lagerhaltung erheblich. Denn statt eine stabilere Ausführungsform eines Sitzwinkels am Lager zu halten, brauchen nur Verstärkungselemente am Lager gehalten werden.

Soll ein Fahrgastsitz mit einem 3-Punkt-Gurt versehen werden, wird das Grundelement lediglich durch das Verstärkungselement ergänzt, wodurch die Stabilität des Grundelements erhöht wird, so daß der ergänzte Sitzwinkel für einen Fahrgastsitz mit 3-Punkt-Sicherheitsgurt geeignet ist. Für Fahrgastsitze, in deren Rückenlehne nicht so große Kräfte eingeleitet werden, wird lediglich das Grundelement verwendet.

Durch die lösbare Verbindung des Verstärkungselements mit dem Grundelement läßt sich die Verbindung auch sehr einfach herstellen, so daß sie bei der Montage vorgenommen werden kann.

Sehr vorteilhaft ist es hierbei, wenn das Grundelement Aufnahmen aufweist, in welche Verbindungselemente des Verstärkungselements anordenbar sind. Besonders vorteilhaft ist es, wenn die Aufnahmen als Ausnehmungen ausgebildet sind, und die Verbindungselemente einen Hinterschnitt aufweisen, mittels welcher die Ausnehmungen teilweise hintergriffen werden.

Hierdurch läßt sich die Verbindung des Verstärkungselements mit dem Grundelement auf sehr einfache Weise vomehmen, wobei eine Verbindung mit sehr hoher Festigkeit geschaffen wird.

Sehr vorteilhaft ist eine Ausführungsform der Erfindung, bei der die Verbindungselemente über Abstandshalter mit dem Verstärkungselement verbunden sind. Hierdurch wird in vorteilhafter Weise erreicht, daß das Verstärkungselement in einem Abstand vom Grundelement angeordnet ist, wobei mittels der Abstandshalter erreicht werden kann, daß das Grundelement durch das Verstärkungselement zu einem Element mit Kastenprofil ergänzt werden kann. Hierdurch wird eine sehr hohe Stabilität des Sitzwinkels erreicht.

Sehr vorteilhaft ist eine Ausführungsform der Erfindung, bei der das Grundelement Öffnungen zum Befestigen des Grundelements auf einer Quertraverse aufweist, und das Verstärkungselement mit den Öffnungen des Grundelements korrespondierende Öffnungen aufweist. Dadurch, daß die Öffnungen des Verstärkungselements mit den Öffnungen des Grundelements korrespondieren, kann das Verstärkungselement zusammen mit dem Grundelement auf der Quertraverse befestigt werden. Zur Befestigung des Verstärkungselements ist somit kein besonderer Arbeitsgang erforderlich. Des weiteren wird durch die Verschraubung des Verstärkungselements mit dem Grundelement die Stabilität des Sitzwinkel erheblich erhöht.

Der erfindungsgemäße Sitzwinkel zeichnet sich insbesondere dadurch aus, daß keine Schweißarbeiten sowie keine zusätzlichen Schraubarbeiten erforderlich sind. Des weiteren ist die den Sitzwinkel betreffende Logistik erheblich vereinfacht.

Weitere Einzelheiten, Merkmale und Vorteile der vorliegenden Erfindung ergeben sich aus der nachfolgenden Beschreibung eines besonderen Ausführungsbeispiels unter Bezugnahme auf die Zeichnung.

Es zeigt
- Figur 1: eine schematische Darstellung eines erfindungsgemäßen Fahrgastsitzes,
- Figur 2: ein erfindungsgemäß ausgebildeter Sitzwinkel und
- Figur 3: den in Figur 2 dargestellten Sitzwinkel in Einzelteildarstellung.

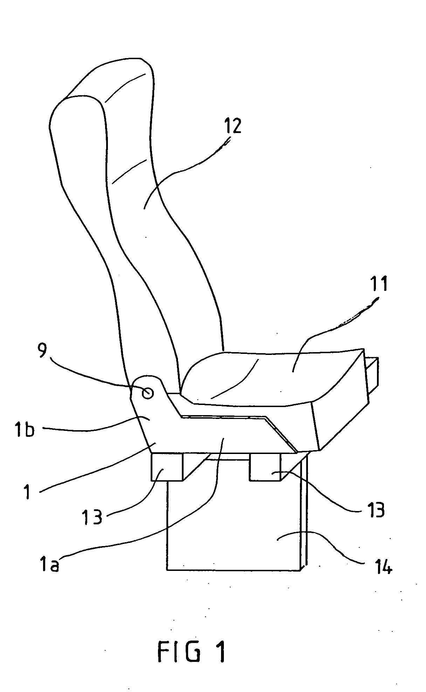

Wie Figur 1 entnommen werden kann, weist ein erfindungsgemäß ausgebildeter Fahrgastsitz ein Sitzteil 11 sowie eine Rückenlehne 12 auf. Das Sitzteil 11 ist zwischen zwei Sitzwinkeln 1 angeordnet, welche auf Quertraversen 13 befestigt sind. Die Quertraversen 13 sind ihrerseits auf Füßen 14 angeordnet. Die Rückenlehne 12 ist mittels in den sich nach oben erstreckenden Schenkeln 1 b der Sitzwinkel 1 ausgebildeten Bohrungen 9 mit den Sitzwinkeln 1 verbunden.

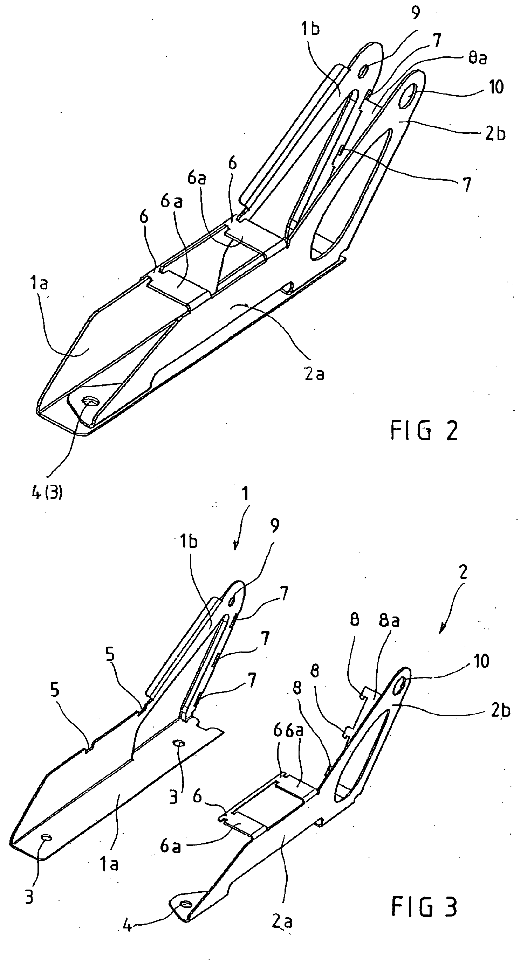

Wie insbesondere die Figuren 2 und 3 entnommen werden kann, besteht ein erfindungsgemäßer Sitzwinkel aus einem Grundelement 1 und einem Verstärkungselement 2. Das Grundelement 1 weist einen auf der Quertraverse 13 anzuordnenden Schenkel 1a und einen sich nach oben erstreckenden Schenkel 1b auf. Der auf der Quertraverse 13 anzuordnende Schenkel 1a ist als Winkelprofil ausgebildet und weist in seinem Teil, der auf der Quertraverse 13 zu liegen kommt, Bohrungen 3 auf, mittels welcher er auf der Quertraverse 13 befestigbar ist.

In dem sich nach oben erstreckenden Schenkel 1b ist an dem dem auf der Quertraverse 13 anzuordnenden Schenkel 1a abgelegenen Ende eine Bohrung 9 angeordnet, zur Befestigung der Rückenlehne 12.

Das Verstärkungselement 2 weist ebenfalls einen auf der Quertraverse 13 anzuordnenden Schenkel 2a und einen sich nach oben erstreckenden Schenkel 2b auf. Der auf der Quertraverse 13 anzuordnende Schenkel 2a weist abgewinkelte Laschen auf, in welchen Bohrungen 4 angeordnet sind. Die Bohrungen 4 korrespondieren zu den Bohrungen 3 des Grundelements 1. Des weiteren weist das Verstärkungselement 2 ebenfalls in dem sich nach oben erstreckenden Schenkel 2b an seinem dem auf der Quertraverse 13 anzuordnenden Schenkel 2a abgewandten Ende eine Bohrung 10 auf. Die Bohrung 10 fluchtet zwar im zusammengebauten Zustand mit der Bohrung 9 des Grundelements 1, ist jedoch größer als die Bohrung 9 des Grundelements 1.

Des weiteren weist das Grundelement 1 an seinem auf der Quertraverse 13 anzuordnenden Schenkel 1a erste Ausnehmungen 5 sowie an seinem sich nach oben erstreckenden Schenkel 1b zweite Ausnehmungen 7 auf. Das Verstärkungselement 2 weist an seinem auf der Quertraverse 13 anzuordnenden Schenkel 2a einen als abgewinkeltes Blech ausgebildeten ersten Abstandshalter 6a auf, an dessen dem auf der Quertraverse 13 anzuordnenden Schenkel 2a abgewandten Ende erste Vorsprünge 6 ausgebildet sind, welche einen Hinterschnitt haben.

Das Grundelement 1 weist des weiteren an seinem sich nach oben erstreckenden Schenkel 1b einen als abgewinkeltes Blech ausgebildeten zweiten Abstandshalter 8a auf, an dessen dem sich nach oben erstreckenden Schenkel 2b abgewandten Ende zweite Vorsprünge 8 ausgebildet sind, welche einen Hinterschnitt haben.

Die ersten Vorsprünge 6 sind so ausgebildet, daß sie mit den ersten Ausnehmungen 5 des Grundelements 1 eine formschlüssige Verbindung bilden. Die zweiten Vorsprünge 8 sind so ausgebildet, daß sie mit den zweiten Ausnehmungen 7 des Grundelements eine formschlüssige Verbindung bilden. Hierdurch läßt sich das Verstärkungselement 2 auf einfache Weise jedoch mit sehr hoher Festigkeit mit dem Gru n-delement 1 verbinden.

Sehr vorteilhaft ist es, daß die zweiten Vorsprünge 8 hakenförmig ausgebildet sind. Hierdurch läßt sich das Verstärkungselement 2 sehr einfach durch Verschieben des Verstärkungselements 2 mit dem Grundelement 1 verbinden. Die T-förmig ausgebildeten ersten Vorsprünge 6 können hierbei von oben in die Ausnehmungen 5 eingeführt werden.

Da die Bohrungen 4 des Verstärkungselements 2 mit den Bohrungen 3 des Grundelements 1 korrespondieren, kann der aus dem Grundelement 1 und dem Verstärkungselement 2 bestehende Sitzwinkel in einem Arbeitsgang beispielsweise auf der Quertraverse 13 befestigt werden. Hierdurch entsteht auch eine weitere feste Verbindung des Verstärkungselements 2 mit dem Grundelement 1, was sich sehr vorteilhaft auf die Stabilität des Sitzwinkels auswirkt.

Die in den sich nach oben erstreckenden Schenkeln 1 b, 2b des Grundelements 1 beziehungsweise Verstärkungselements 2 angeordneten Bohrungen 9, 10 dienen der Befestigung der Rückenlehne 12. Ist die Rückenlehne 12 verschwenkbar ausgebildet, erstreckt sich durch die Öffnungen 9, 10 die Schwenkachse der Rückenlehne 12. Dadurch, daß die Bohrung 10 des Verstärkungselements 2 größer ausgebildet ist als die Bohrung 9 des Grundelements 1 läßt sich eine entsprechend im Durchmesser stufig ausgebildete Schwenkachse problemlos in die Bohrungen 9, 10 einführen, wobei die Schwenkachse nahezu spielfrei in den Bohrungen 9, 10 sitzt.

## Patentansprüche

1. Fahrgastsitz für Personenbeförderungsfahrzeuge, insbesondere für Busse und Bahnen, mit einem Sitzelement (11) und einer Rückenlehne (12), welche an beidseits des Sitzelements (11) angeordneten Sitzwinkeln (1, 2) befestigt ist,
**dadurch gekennzeichnet,**
**daß** die Sitzwinkel (1, 2) aus einem Grundelement (1), mittels welchem die Rückenlehne bereits vollständig befestigbar ist, und einem lösbar mit ihm verbundenen Verstärkungselement (2) bestehen.

2. Fahrgastsitz nach Anspruch 1,
**dadurch gekennzeichnet,**
**daß** das Grundelement (1) Aufnahmen (5, 7) aufweist, in welche Verbindungselemente (6, 8) des Verstärkungselements (2) anordenbar sind.

3. Fahrgastsitz nach Anspruch 2,
**dadurch gekennzeichnet,**
**daß** die Aufnahmen (5, 7) als Ausnehmungen ausgebildet sind und die Verbindungselemente einen Hinterschnitt aufweisen, mittels dem die Ausnehmungen zumindest teilweise hintergreifbar sind.

4. Fahrgastsitz nach Anspruch 2 oder 3,
**dadurch gekennzeichnet,**
**daß** die Verbindungselemente (6, 8) über Abstandshalter (6a, 8a) mit dem Verstärkungselement (2) verbunden sind.

5. Fahrgastsitz nach einem der Ansprüche 1 bis 4,
**dadurch gekennzeichnet,**
**daß** das Grundelement (1) Öffnungen (3) zur Befestigung des Grundelements auf einer Quertraverse (13) aufweist, und das Verstärkungselement (2) mit den Öffnungen (3) des Grundelements (2) korrespondierende Öffnungen (4) aufweist.
